# EUROPEAN PATENT SPECIFICATION

(11) **EP 2 733 986 B1**
(45) Date of publication and mention of the grant of the patent: **20.03.2019**
(21) Application number: 12192500.2
(22) Date of filing: 14.11.2012
(51) Int. Cl.: H04W 36/22, H04W 28/08

(54) **Method for offloading a base station of a wireless cellular telecommunication network**
Verfahren zum Entladen einer Basisstation eines drahtlosen zellularen Telekommunikationsnetzwerks
Procédé pour décharger une station de base d'un réseau de télécommunication cellulaire sans fil

(43) Date of publication of application: 21.05.2014
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Khanfouci, Mourad, 35708 Rennes Cedex 7 (FR); Brunel, Loïc, 35708 Rennes Cedex 7 (FR); Gresset, Nicolas, 35708 Rennes Cedex 7 (FR); Bonneville, Hervé, 35708 Rennes Cedex 7 (FR)
(74) Representative: Cabinet Le Guen Maillet

(56) References cited:
- EP-A1- 2 326 118
- US-A1- 2010 214 943
- US-A1- 2011 128 862
- US-A1- 2012 270 553
- ALCATEL-LUCENT SHANGHAI BELL ET AL: "Network-Assisted Inter-frequency Pico Cell Discovery in LTE HetNets", 3GPP DRAFT; R2-121709 ON NETWORK-ASSISTED INTER-FREQUENCY PICO CELL DISCOVERY IN LTE HETNETS_R3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju Island, Korea; 20120326 - 20120330, 20 March 2012 (2012-03-20), XP050606413, [retrieved on 2012-03-20]

## Description

The present invention relates generally to a method and a device for offloading a base station of a wireless cellular telecommunication network by nodes of the wireless cellular telecommunication network, the nodes being located in a cell of the base station.

Wireless cellular telecommunication networks are largely deployed but there are still some areas not covered by the base stations of the wireless cellular telecommunication network.

For example, the access to the wireless cellular telecommunication network might not be possible or might require a too high transmission power or a too low spectral efficiency, i.e. too many system resources for a mobile terminal located in a building, if the signals radiated by the base stations and/or by the mobile terminal are too attenuated.

Solutions are proposed today. Particular nodes like pico base stations or femto base stations or home base stations or relays, may provide coverage areas outdoor or within the buildings and may be used for offloading base stations.

The pico base stations or femto base stations provide a limited coverage area. Even if the number of pico base stations increases, it is sometime difficult to perform offloading of base stations as the pico base stations coverage areas are limited and as the resources provided by pico base stations are limited in comparison to base station resources.

The pico base station may be installed by wireless cellular telecommunication network operators in some particular areas. The pico base stations enable a limited number of mobile terminals to access the wireless cellular telecommunication network through their respective resources.

The home base stations may enable a limited number of mobile terminals to access the wireless cellular telecommunication network through their respective resources. The mobile terminals allowed to access the resources of the network through the home base station may be determined by the owner of the home base station, the network or a combination of both.

The owner must be understood here in the general sense: the owner may only be the main user of the home base station, the owner may be the person who rents the home base station or the owner may be the person who accommodates the home base station in his house or office.

Base stations enable a large number of mobile terminals to access the wireless cellular telecommunication network through their respective resources. The mobile terminals allowed to access the resources of the network through the base station may be determined by the operator of the wireless cellular telecommunication network.

The patent application US 2012/0270553 disclose load balancing in femtocells.

The paper "Network assisted inter frequency pico cell discovery in LTE HetNets" 3GPP draft R2-121709 on network assisted inter frequency pico cell discovery in LTE HetNets from Alcatel Lucent issued on March 20, 2012 discloses cell discovery.

The patent application US 2011/0128862 discloses optimizing a quality of service via load balancing.

The present invention aims at offloading a base station of a wireless cellular telecommunication network without any centralizing device in charge of the offloading.

To that end, the present invention concerns a method for offloading a base station of a wireless cellular telecommunication network by nodes of the wireless cellular telecommunication network, the nodes being located in a cell of the base station, the base station serving plural mobile terminals, at least one node serving at least one mobile terminal, as disclosed in claim 1.

The present invention concerns also a device for offloading a base station of a wireless cellular telecommunication network by nodes of said wireless cellular telecommunication network, the nodes being located in a cell of the base station, the base station serving plural mobile terminals, at least one node serving at least one mobile terminal, as disclosed in claim 13.

Thus, the overall flexibility of the offloading process is increased while signalling is kept low between the base station and the nodes of the wireless cellular telecommunication network.

Furthermore, by using virtual offloading capacity instead of real availability of nodes resources, it is possible, by performing handover between neighbouring nodes, to increase the resources that will be available for nodes that can serve mobile terminals served by the base station. The offloading of the base station is then very efficient.

According to a particular feature, at least the node serving the mobile terminal prior to the handover of the mobile terminal served by the node which served the mobile terminal handed over to the neighbouring node obtains load information from neighbouring nodes, the load information being the available resources of the node interfaces and/or the number of mobile terminals the node is serving and/or the number of neighbouring nodes and in that the virtual offloading capacity is obtained from obtained load information.

Thus, the offloading performance is improved since the offloading is performed to the at least one node with the lowest load.

According to a particular feature, the virtual offloading capacity is the amount of the node interfaces resources that could be freed if at least mobile terminal served by the node is handed over to a neighbouring node or is the amount of mobile terminals that could be served freed if at least one mobile terminal served by the node is handed over to a neighbouring node or is the throughput that the node could provide at least mobile terminal served by the node is handed over to a neighbouring node.

Thus, the reactivity of the offloading to high mobility of mobile terminals is improved since the nodes are signalling in advance the interfaces resources that could be freed. Moreover, the performance of the offloading is improved because the offloading is performed to the nodes that are offering the best throughput.

According to a particular feature, the obtaining of the virtual offloading capacity is executed by each node periodically and transferred to the base station and the determining with which neighbouring node a handover of the mobile terminal served by one node has to be performed is performed by the base station.

Thus, the virtual offloading capacity related complexity is reduced at the base station since it is executed within the nodes of the wireless cellular telecommunication network.

According to a particular feature, the base station transfers a message to each node requesting the node to determine the virtual offloading capacity, the virtual offloading capacities are obtained by the base station and the determining with which neighbouring node a handover of the mobile terminal served by one node has to be performed is executed by the base station.

Thus, the virtual offloading capacity of each node does not have to be stored or updated. The memory resources of the base station are used efficiently. Furthermore the operation and maintenance requirements are reduced.

According to a particular feature, the base station:
- selects, among the nodes located in the cell of the base station, a subset of nodes,
- transfers a message to the nodes of the subset of nodes, the message requesting the nodes to determine the virtual offloading capacity, the virtual offloading capacities are obtained by the base station and the determining with which neighbouring node a handover of the mobile terminal served by one node has to be performed is executed by the base station.

Thus, the virtual offloading capacity related signalling is further reduced since the base station is preselecting reduced number of nodes for triggering virtual offloading capacity calculation.

According to a particular feature, the nodes of the subset of nodes are selected according to the number of neighbouring nodes of the nodes and/or according to number of mobile terminals served by the base station and located in a cell of said nodes.

Thus, the virtual offloading capacity calculation is further simplified and the offloading performance is improved since the subset may be selected to maximize the number of nodes for which handover of the mobile terminal served by one node has to be performed.

According to a particular feature, one message is transferred to each node of the subset of nodes, each message further comprising information indicating the number of mobile terminals served by the base station for which a handover is susceptible to be performed.

Thus, the flexibility of the offloading is improved since at least one node may be addressed individually in the subset of nodes. Furthermore, by indicating the number of mobile terminals served by the base station for which a handover is susceptible to be performed, the nodes become aware of the amount of resources that should be freed in order to serve the given number of mobile terminals.

According to a particular feature, each node of the subset of nodes notifies the neighbouring node that the node belongs to the subset.

Thus, offloading efficiency is improved since virtual offloading capacity calculation is performed cooperatively between nodes from the subset of nodes. Nodes which are not included in the subset of nodes are aware that priority should be given to mobile terminals served by the nodes of the subset of nodes for handover.

According to a particular feature, the nodes are linked to a gateway and the base station transfers a message to the gateway requesting the gateway to determine the virtual offloading capacities, the virtual offloading capacities are obtained by the base station and the determining with which neighbouring node a handover of the mobile terminal served by one node has to be performed is performed by the base station.

Thus, virtual offloading capacity calculations complexity is reduced at the nodes and overall signalling to the base station is further reduced.

According to a particular feature, the base station notifies to the gateway which node serving at least one mobile terminal has to perform a handover with one neighbouring node or notifies the nodes serving at least one mobile terminal for which a handover has to be performed with one neighbouring node.

Thus, the overall signalling and processing load related to offloading is reduced at the base station due to the proxy structure of the gateway.

According to a particular feature, the base station notifies to the gateway which node has to perform a handover of at least one mobile terminal served by the base station or notifies to each node involved in at least one handover of at least one mobile terminal served by the base station.

Thus, virtual offloading capacity calculations complexity is reduced at the nodes and the overall reactivity of the overall offloading process is improved for high mobility mobile terminals.

According to a particular feature, the nodes are base stations and/or pico base stations and/or home base stations and/or relays.

Thus, the efficiency of the offloading is improved for heterogonous networks deployment within the coverage area of the base station.

According to still another aspect, the present invention concerns computer programs which can be directly loadable into a programmable device, comprising instructions or portions of code for implementing the steps of the method according to the invention, when said computer programs are executed on a programmable device.

Since the features and advantages relating to the computer programs are the same as those set out above related to the method and device according to the invention, they will not be repeated here.

The characteristics of the invention will emerge more clearly from a reading of the following description of example embodiments, the said description being produced with reference to the accompanying drawings, among which :
Fig. 1 represents a wireless cellular telecommunication network in which the present invention is implemented;
Fig. 2 is a diagram representing the architecture of a base station in which the present invention is implemented ;
Fig. 3 is a diagram representing the architecture of a pico base station in which the present invention is implemented ;
Fig. 4 is a diagram representing the architecture of a gateway in which the present invention is implemented ;
Fig. 5 discloses an algorithm executed by each pico base station according to a first mode of realization of the present invention ;
Fig. 6 discloses an algorithm executed by each pico base station for exchanging information with neighbouring pico base stations;
Fig. 7 discloses an algorithm executed by each pico base station or a gateway for determining offloading capacity according to the invention;
Fig. 8 is an algorithm executed by a base station for determining for which mobile terminal a handover may be performed in order to be offloaded by pico base stations according to the first mode of realization of the present invention;
Fig. 9 is an algorithm executed by a base station for determining for which mobile terminal a handover may be performed in order to be offloaded by pico base stations according to a second mode of realization of the present invention;
Fig. 10 discloses an algorithm executed by each pico base station according to the second mode of realization of the present invention ;
Fig. 11 is an algorithm executed by a base station for determining for which mobile terminal a handover may be performed in order to be offloaded by pico base stations according to a third mode of realization of the present invention;
Fig. 12 discloses an algorithm executed by each pico base station according to the third mode of realization of the present invention ;
Fig. 13 is an algorithm executed by a base station for determining for which mobile terminal a handover may be performed in order to be offloaded by pico base stations according to a fourth mode of realization of the present invention;
Fig. 14 discloses an algorithm executed by a gateway according to the fourth mode of realization of the present invention ;
Fig. 15 discloses an algorithm executed by each pico base station according to the fourth mode of realization of the present invention ;
Fig. 16 discloses an algorithm executed by a gateway according to a variant of the fourth mode of realization of the present invention.

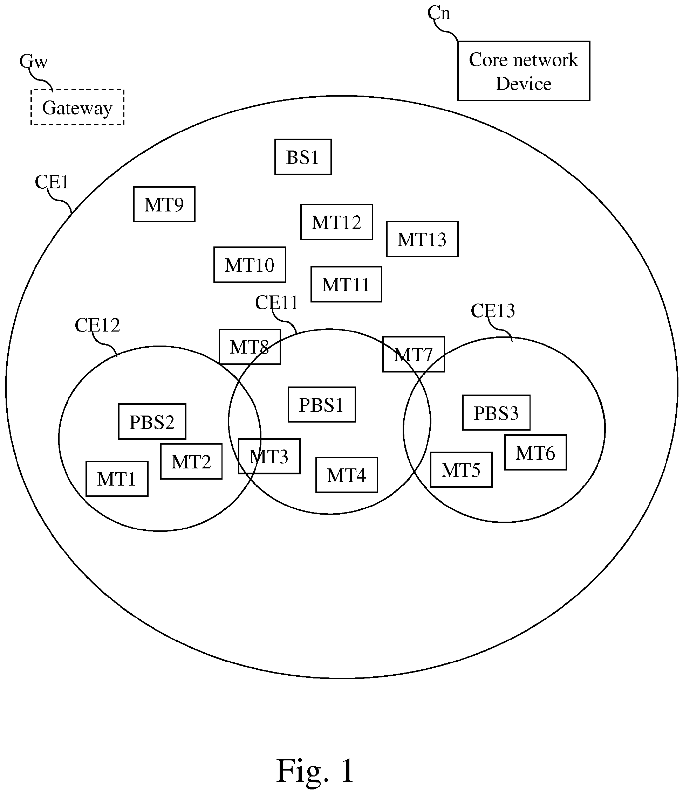

**Fig. 1** represents a wireless cellular telecommunication network in which the present invention is implemented.

In Fig. 1, one core network device Cn, one gateway Gw, one base station BS1 and plural nodes PBS1 to PBS3 of a wireless cellular telecommunication network are shown.

The nodes are base stations and/or pico base stations and/or home base stations and/or relays. The present invention will be disclosed in an example wherein the nodes are pico base stations.

For example, a relay is a pico base station PBS which is connected to the wireless cellular telecommunication network via a wireless link with the base station BS1.

Each pico base station PBS1 to PBS3 is for example located outdoor or into home and may enable mobile terminals MT to access the wireless cellular telecommunication network.

Only one base station BS1 and three pico base stations PBS1 to PBS3 are shown but we can understand that the present invention works when a more important number of base stations BS and/or pico base stations PBS exist.

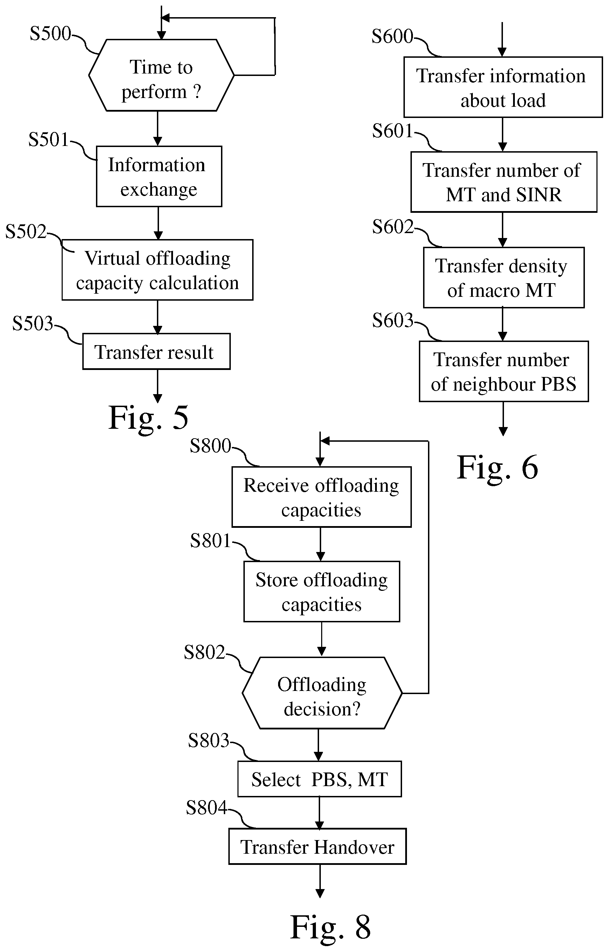

The core network device Cn may manage plural base stations of the wireless cellular telecommunication network and may execute, instead of the base station BS, the algorithms that will be disclosed hereinafter in reference to Figs. 8, 9, 11 and 13.

According to the fourth mode of realization, the gateway Gw manages the pico base stations PBS1 to PBS3.The base station BS1 is for example a base station of a wireless cellular telecommunication network which may serve mobile terminals located in the cell CE1 of the base station BS1.

Only thirteen mobile terminals MT1 to MT13 are shown in Fig. 1 for the sake of clarity.

The base station BS is able to receive signals transferred by mobile terminals MT1 to MT13 which are located in the area or cell CE1. The base station BS1 transfers signals which can be received and processed by mobile terminals MT1 to MT13 located in the cell CE1.

In the example of Fig. 1, the base station BS1 has only one cell CE1. The present invention is also applicable when the base station BS1 has plural cells. In that case, the present invention may be applied independently for each cell of the base station BS1.

The pico base stations PBS1 to PBS3 are comprised in the cell CE1 of the base station BS1.

The pico base station PBS1 radiates signals which can be received and processed by mobile terminals MT3, MT4, MT7 and MT8 located in the cell CE11 of the pico base station PBS1.

The pico base station PBS1 is able to receive signals transferred by the mobile terminals MT3, MT4, MT7 and MT8.

The pico base station PBS2 radiates signals which can be received and processed by mobile terminals MT1, MT2, MT3 and MT8 located in the cell CE12 of the pico base station PBS2.

The pico base station PBS2 is able to receive signals transferred by the mobile terminals MT1, MT2, MT3 and MT8.

The pico base station PBS3 radiates signals which can be received and processed by mobile terminals MT5, MT6 and MT7 located in the cell CE13 of the pico base station PBS3.

The pico base station PBS3 is able to receive signals transferred by the mobile terminals MT5, MT6 and MT7.

The mobile terminals MT7 to MT13 are served by the base station BS1.

The mobile terminals MT1 and MT2 are served by the pico base station PBS2.

The mobile terminals MT3 and MT4 are served by the pico base station PBS1.

The mobile terminals MT5 and MT6 are served by the pico base station PBS3.

When a mobile terminal MT is served by a base station BS or a pico base station PBS, it can receive or establish or continue a communication with a remote telecommunication device through the base station BS or the pico base station PBS.

The pico base stations PBS, the base station BS1, the core network device Cn and if there is one, the gateway Gw are linked by at least one communication network not shown in Fig. 1.

According to the invention, a base station of a wireless cellular telecommunication network is offloaded by nodes of the wireless cellular telecommunication network, the nodes are located in a cell of the base station, the base station serves plural mobile terminals and at least one node serving at least one mobile terminal. According to the invention:
- the virtual offloading capacity of at least a part of the nodes located in the cell of the base station is obtained, the virtual offloading capacity of one node being determined considering that at least one neighbouring node of the node may serve a mobile terminal currently served by the node,
- it is determined with which neighbouring node a handover of the mobile terminal served by one node has to be performed according to virtual offloading capacities,
- it is performed the handover of the mobile terminal served by one node with the neighbouring node,
- it is performed a handover of at least one mobile terminal served by the base station to the node which serves the mobile terminal handed over to the neighbouring node.

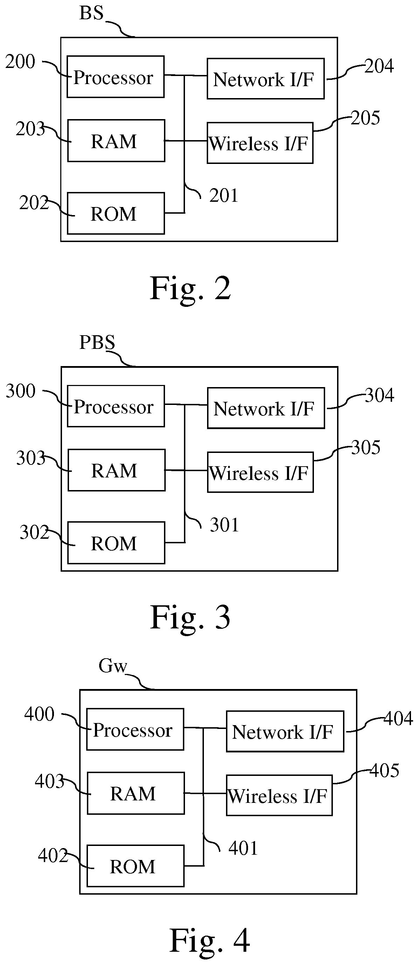

**Fig. 2** is a diagram representing the architecture of a base station in which the present invention is implemented.

The base station BS has, for example, an architecture based on components connected together by a bus 201 and a processor 200 controlled by the programs as disclosed in Figs. 8, 9, 11 and 13.

The bus 201 links the processor 200 to a read only memory ROM 202, a random access memory RAM 203, a wireless interface 205 and a network interface 206.

The memory 203 contains registers intended to receive variables and the instructions of the programs related to the algorithms as disclosed in Figs. 8, 9, 11 and 13.

The processor 200 controls the operation of the network interface 206 and of the wireless interface 205.

The read only memory 202 contains instructions of the programs related to the algorithms as disclosed in Figs. 8, 9, 11 and 13, which are transferred, when the base station BS is powered on, to the random access memory 203.

The base station BS may be connected to a telecommunication network through the network interface 206. For example, the network interface 206 is a DSL (Digital Subscriber Line) modem, or an ISDN (Integrated Services Digital Network) interface, etc. Through the network interface 206, the base station BS may transfer messages to the core network of the wireless cellular telecommunication network.

The wireless interface 205 and the network interface 206 are the resources of the base station BS used by a mobile terminal in order to access to the wireless cellular telecommunication network when the mobile terminal establishes or receives a communication with a remote telecommunication device.

Any and all steps of the algorithms described hereafter with regard to Figs. 8, 9, 11 and 13 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the base station BS includes circuitry, or a device including circuitry, causing the base station BS to perform the steps of the algorithms described hereafter with regard to Figs. 8, 9, 11 and 13.

**Fig. 3** is a diagram representing the architecture of a pico base station in which the present invention is implemented.

The pico base station PBS has, for example, an architecture based on components connected together by a bus 301 and a processor 300 controlled by the programs as disclosed in Figs. 5, 6, 7, 10, 12 and 15.

The bus 301 links the processor 300 to a read only memory ROM 302, a random access memory RAM 303, a wireless interface 305 and a network interface 306.

The memory 303 contains registers intended to receive variables and the instructions of the programs related to the algorithms as disclosed in Figs. 5, 6, 7, 10, 12 and 15.

The processor 300 controls the operation of the network interface 306 and of the wireless interface 305.

The read only memory 302 contains instructions of the program related to the algorithms as disclosed in Figs. 5, 6, 7, 10, 12 and 15, which are transferred, when the pico base station PBS is powered on, to the random access memory 303.

The pico base station PBS may be connected to a telecommunication network through the network interface 306. For example, the network interface 306 is a DSL (Digital Subscriber Line) modem, or an ISDN (Integrated Services Digital Network) interface or a wireless link linking the pico base station PBS to the base station BS, etc. Through the network interface 306, the pico base station PBS may transfer messages to the core network of the wireless cellular telecommunication network.

The wireless interface 305 and the network interface 306 are the resources of the pico base station PBS used by a mobile terminal in order to access to the wireless cellular telecommunication network when the mobile terminal establishes or receives a communication with a remote telecommunication device.

Any and all steps of the algorithms described hereafter with regard to Figs. 5, 6, 7, 10, 12 and 15 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit).*

In other words, the pico base station PBS includes circuitry, or a device including circuitry, causing the pico base station PBS to perform the steps of the algorithms described hereafter with regard to Figs. 5, 6, 7, 10, 12 and 15.

**Fig. 4** is a diagram representing the architecture of a gateway in which the present invention is implemented.

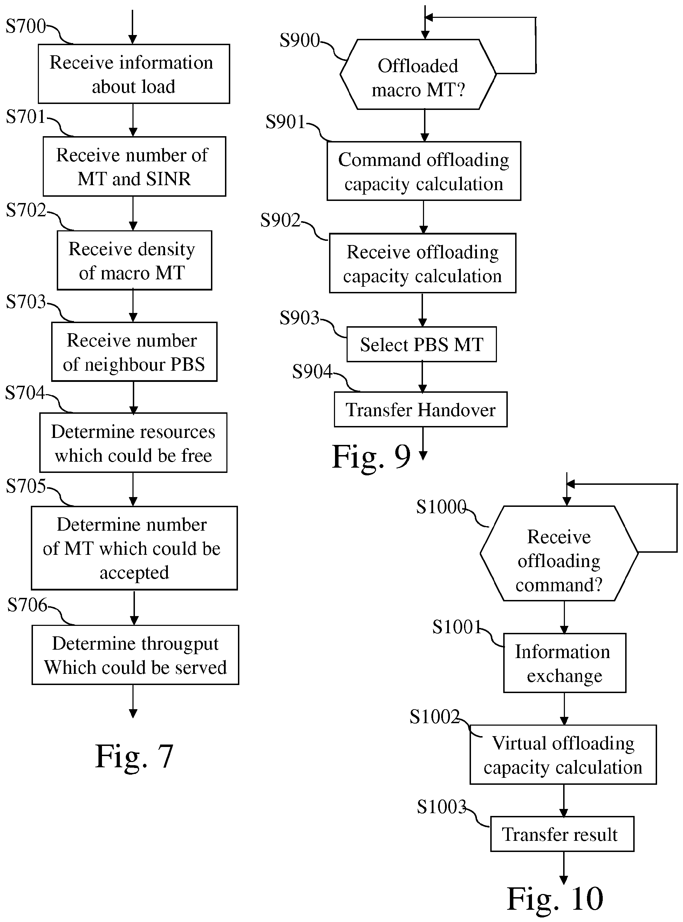

The gateway Gw has, for example, an architecture based on components connected together by a bus 401 and a processor 400 controlled by the program as disclosed in Figs. 7 and/or 14 or 16.

The bus 401 links the processor 400 to a read only memory ROM 402, a random access memory RAM 403 and a network interface 406.

The memory 403 contains registers intended to receive variables and the instructions of the programs related to the algorithm as disclosed in Figs. 7 and/or 14 or 16.

The processor 400 controls the operation of the network interface 406.

The read only memory 402 contains instructions of the program related to the algorithm as disclosed in Figs. 7 and/or 14 or 16, which are transferred, when the gateway Gw is powered on, to the random access memory 403.

The gateway Gw is connected to the telecommunication network through the network interface 406. For example, the network interface 406 is a DSL (Digital Subscriber Line) modem, or an ISDN (Integrated Services Digital Network) interface, etc. Through the network interface 406, the gateway Gw may transfer messages to the core network and/or base stations BS and/or pico base stations of the wireless cellular telecommunication network.

Any and all steps of the algorithm described hereafter with regard to Figs. 7 and/or 14 or 16 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the gateway Gw includes circuitry, or a device including circuitry, causing the gateway to perform the steps of the algorithm described hereafter with regard to Figs. 7 and/or 14 or 16.

**Fig. 5** discloses an algorithm executed by each pico base station according to a first mode of realization of the present invention.

More precisely, the present algorithm is executed by the processor 300 of each pico base station PBS.

At step S500, the processor 300 checks if it is time to perform an offloading capacity calculation. If it is time to perform an offloading capacity calculation, the processor 300 moves to step S501. Otherwise, the processor 300 returns to step S500.

The offloading capacity calculation is performed periodically, for example every hour.

At step S501, the processor 300 commands the network interface 304 in order to transfer information related to the current conditions of the pico base station PBS regarding its radio environment to neighbouring pico base stations PBS.

The neighbouring pico base stations PBS are determined by the pico base station PBS according to radio signals received by the pico base station PBS or are derived from measurement reports transferred by mobile terminals handled by the pico base station PBS or are notified to the pico base station PBS by the base station BS1 in the cell of which the pico base station BS is located or are notified by the core network device Cn.

The step S501 is disclosed with more details in reference to Figs. 6.

At next step S502, the processor 300 performs the virtual offloading capacity calculation.

The offloading capacity is considered as virtual as the offloading capacity is determined considering that at least one neighbouring pico base station PBS may serve a mobile terminal MT currently served by the pico base station PBS. In other words, the virtual offloading capacity is determined considering that at least one handover of at least one mobile terminal could be performed with a neighbouring pico base station PBS. The virtual offloading capacity is not representative of the current offloading capacity of a pico base station PBS, but is representative of future capacity if at least one handover is performed. The virtual offloading capacity is one or a combination of the results of determination steps S704 to S706 which will be disclosed herein after in reference to Fig. 7.

At next step S503, the processor 300 commands the transfer, through the network interface 304, of the calculated virtual offloading capacity.

The virtual offloading capacity is transferred to the base station BS1 or to the core network device Cn.

**Fig. 6** discloses an algorithm executed by each pico base station for exchanging information with neighbouring pico base stations.

More precisely, the present algorithm is executed by the processor 300 of each pico base station PBS.

The present algorithm will be disclosed in an example wherein it is executed by the processor 300 of the pico base station PBS1.

At step S600, the processor 300 commands the transfer of load information of the pico base station PBS1 to the neighbouring pico base stations PBS2 and PBS3.

For example, load information comprises the available wireless interface 305 resources and the available network interface 304 resources.

For example, the load information of the pico base station PBS1 indicates that seventy per cent of the wireless interface 305 resources are currently used and that thirty per cent of the network interface are currently used.

At next step S601, the processor 300 commands the transfer of the number of mobile terminals MT the pico base station PBS1 is currently serving to the neighbouring pico base stations PBS2 and PBS3. The processor 300 may command the transfer of information identifying the mobile terminals MT the pico base station PBS1 is currently serving to the neighbouring pico base stations PBS2 and PBS3.

For example, the pico base station PBS1 is currently serving the mobile terminals MT3 and MT4.

At next step S602, the processor 300 commands the transfer, to the neighbouring pico base stations PBS2 and PBS3, of the number of mobile terminals MT served by the base station BS1 which are currently located in its cell CE11, the number of mobile terminals MT served by the pico base station PBS2 which are currently located in its cell CE11 and the number of mobile terminals MT served by the pico base station PBS3 which are currently located in its cell CE11. The processor 300 may command the transfer, to the neighbouring pico base stations PBS2 and PBS3, of information identifying the mobile terminals MT served by the base station BS1 which are currently located in its cell CE11, of information identifying the mobile terminals MT served by the pico base station PBS2 which are currently located in its cell CE11 and of information identifying the mobile terminals MT served by the pico base station PBS3 which are currently located in its cell CE11.

For example, the mobile terminals MT7 and MT8 are currently served by the base station BS1 and are located in the cell CE11.

At next step S603, the processor 300 may, for example when neighbouring conditions change, command the transfer of the number of neighbouring pico base stations PBS of the pico base station PBS1 to the neighbouring pico base stations PBS2 and PBS3. In a variant, the step S603 is not executed if the base station BS1 is already aware of neighbouring pico base stations PBS of the pico base station PBS1.

For example, the pico base station PBS1 has two neighbouring pico base stations, the pico base stations PBS1 and PBS2.

**Fig. 7** discloses an algorithm executed by each pico base station or a gateway for determining offloading capacity according to the invention.

More precisely, the present algorithm is executed by the processor 300 of each pico base station PBS or by the processor 400 of the gateway Gw.

The present algorithm will be disclosed in an example wherein it is executed by the processor 300 of the pico base station PBS1.

At step S700, the processor 300 receives, through the network interface 305, load information of its neighbouring pico base stations PBS2 and PBS3.

For example, the load information of the pico base station PBS2 indicates that forty per cent of the wireless interface 305 resources are currently used and that thirty per cent of the network interface 304 are currently used.

For example, the load information of the pico base station PBS3 indicates that forty per cent of the wireless interface 305 resources are currently used and that thirty per cent of the network interface 304 are currently used.

At next step S701, the processor 300 receives, through the network interface 305, the number of mobile terminals MT the pico base stations PBS2 and PBS3 are respectively currently serving. The processor 300 receives also the number of mobile terminals MT the pico base station PBS1 serves and which are located in the cell CE12 and the number of mobile terminals MT the pico base station PBS1 serves and which are located in the cell CE13.

The processor 300 may receive, through the network interface 305, information identifying the mobile terminals MT the pico base stations PBS2 and PBS3 are respectively currently serving. The processor 300 may receive also information identifying the mobile terminals MT the pico base station PBS1 serves and which are located in the cell CE12 and the number of mobile terminals MT the pico base station PBS1 serves and which are located in the cell CE13.

For example, the pico base station PBS2 is currently serving the mobile terminals MT1 and MT2.

For example, the pico base station PBS3 is currently serving the mobile terminals MT5 and MT6.

For example, the mobile terminal MT3 served by the pico base station PBS1 is located in the cell CE12.

At next step S702, the processor 300 receives, through the network interface 305, the number of mobile terminals MT served by the base station BS1 which are respectively currently located in the cells CE12 and CE13 of the neighbouring pico base stations PBS2 and PBS3.

The processor 300 may receive, through the network interface 305, information identifying the mobile terminals MT served by the base station BS1 which are respectively currently located in the cells CE12 and CE13 of the neighbouring pico base stations PBS2 and PBS3.

For example, the mobile terminal MT8 is currently served by the base station BS1 and is located in the cell CE12.

For example, the mobile terminal MT7 is currently served by the base station BS1 and is located in the cell CE13.

At next step S703, the processor 300 receives, through the network interface 305, the number of neighbouring pico base stations PBS the pico base stations PBS1 and PBS3 have.

For example, the pico base station PBS2 has one neighbouring pico base station, the pico base station PBS1.

For example, the pico base station PBS3 has one neighbouring pico base station, the pico base station PBS1.

At next step S704, the processor 300 determines among resources that could be freed if at least one mobile terminal MT the pico base station PBS1 is currently serving is handed over to at least one neighbouring pico base station PBS2 and/or PBS3.

The processor 300 is aware that one of the mobile terminal MT3 or MT4 is served is located in the cell CE12, that the pico base station PBS2 has some available resources, that one mobile terminal MT served by the base station BS1 is located in the cell CE11 and that one mobile terminal MT served by the base station BS1 is located in the cell CE12.

The processor 300 determines that one mobile terminal MT the pico base station PBS1 is currently serving could be handed over to the pico base station PBS2.

The processor 300 determines the amount of wireless interface or network interface resources that could be freed if at least one mobile terminal is handed over.

For example, if one mobile terminal MT is handed over to the pico base station PBS2, seventy per cent of the wireless interface 305 resources could be available and seventy per cent of the network interface 304 could be available.

At next step S705, the processor 300 determines the number of extra mobile terminals MT the pico base station PBS1 could serve if more resources become available.

For example, the processor 300, using the result of step S704, determines that two extra mobile terminals MT could be served by the pico base station PBS1.

At next step S706, the processor 300 determines the throughput that the pico base station PBS1 could provide if more resources become available.

**Fig. 8** is an algorithm executed by a base station for determining for which mobile terminal a handover may be performed in order to be offloaded by pico base stations according to the first mode of realization of the present invention.

It has to be noted here that, instead of being executed by the base station BS1, the present algorithm may be executed by the core network device Cn.

More precisely, the present algorithm is executed by the processor 200 of the base station BS1.

At step S800, the processor 200 detects the reception of virtual offloading capacities from pico base stations PBS1 to PBS3 located in the cell CE1 of the base station BS1.

For example, the virtual offloading capacity of the pico base station PBS1 is seventy per cent of its wireless interface resources and is seventy per cent of its network interface if a handover of a mobile terminal is performed and/or is that two extra mobile terminals MT could be served by the pico base station PBS1 if a handover of a mobile terminal MT is performed and/or is the throughput that the pico base station PBS1 could provide if more resources become available.

For example, the pico base station PBS2 is aware that none of the mobile terminals MT1 and MT2 is located in the cell of a neighbouring pico base station PBS1, that one mobile terminal MT served by the base station BS1 is located in the cell CE12 and that one mobile terminal MT served by the pico base station PBS1 is located in the cell CE12.

The pico base station PBS2 determines that two extra mobile terminals MT could be served by the pico base station PBS2.

Considering the two extra mobile terminals, the virtual offloading capacity of the pico base station PBS2 is ten per cent of its wireless interface resources and is ten per cent of its network interface and/or is that two extra mobile terminals MT could be served by the pico base station PBS2 and/or is the throughput that the pico base station PBS2 could provide if more resources become available.

For example, the pico base station PBS3 is aware that none of the mobile terminals MT5 and MT6 is located in the cell of a neighbouring pico base station PBS, that one mobile terminal MT served by the base station BS1 is located in the cell.

The pico base station PBS3 determines that one extra mobile terminal MT could be served by the pico base station PBS3.

Considering that extra mobile terminal MT, the virtual offloading capacity of the pico base station PBS3 is forty per cent of its wireless interface resources and is forty per cent of its network interface and/or is that one extra mobile terminal MT could be served by the pico base station PBS3 and/or is the throughput that the pico base station PBS3 could provide if more resources become available.

At next step S801, the processor 200 memorizes in RAM memory 203, the virtual offloading capacities received at step S800.

At next step S802, the processor 200 checks if the base station BS1 needs to be offloaded. For example, the base station BS1 needs to be offloaded if more than 90 of its wireless interface 205 resources or of its network interface 204 resources are currently used.

If the base station BS1 needs to be offloaded, the processor 200 moves to step S803. Otherwise, the processor 200 returns to step S800.

At step S803, the processor 200 selects at least one mobile terminal MT which has to be handed over by at least one pico base station PBS.

For that, the processor 200 uses measurement reports provided by mobile terminals MT7 to MT12 and virtual offloading capabilities provided by pico base stations PBS.

The processor 200 determines that the mobile terminal MT8 is in the cells of pico bases stations PBS1 and PBS2 and that the mobile terminal MT7 is in the cells of pico bases stations PBS1 and PBS3.

The virtual offloading capacity of the pico base station PBS3 is forty per cent of its wireless interface resources and is forty per cent of its network interface and/or is that one extra mobile terminal MT could be served by the pico base station PBS3 and/or is the throughput that the pico base station PBS3 could provide if more resources become available.

The processor 200 determines that a handover of the mobile terminal MT7 has to be performed with the pico base station PBS3.

The virtual offloading capacity of the pico base station PBS1 is seventy per cent of its wireless interface resources and is seventy per cent of its network interface and/or is that two extra mobile terminals MT could be served by the pico base station PBS1 and/or is the throughput that the pico base station PBS1 could provide if more resources become available.

The virtual offloading capacity of the pico base station PBS2 is ten per cent of its wireless interface resources and is ten per cent of its network interface and/or is that two extra mobile terminals MT could be served by the pico base station PBS2 and/or is the throughput that the pico base station PBS2 could provide if more resources become available.

The processor 200 determines that a handover of the mobile terminal MT8 has to be performed with the pico base station PBS1 and that a handover of the mobile terminal MT3 should be performed between the pico base stations PBS1 and PBS2.

At next step S804, the processor 200 commands the transfer to the pico base stations PBS1 to PBS3, of information indicating for which mobile terminal a handover should be performed and with which base station or pico base station.

**Fig. 9** is an algorithm executed by a base station for determining for which mobile terminal a handover may be performed in order to be offloaded by pico base stations according to a second mode of realization of the present invention.

It has to be noted here that, instead of being executed by the base station BS1, the present algorithm may be executed by the core network device Cn.

More precisely, the present algorithm is executed by the processor 200 of the base station BS1.

At step S900, the processor 200 checks if the base station BS1 needs to be offloaded. For example, the base station BS1 needs to be offloaded if more than 90 of its wireless interface 205 resources or of its network interface 204 resources are currently used.

If the base station BS1 needs to be offloaded, the processor 200 moves to step S901. Otherwise, the processor 200 returns to step S900.

At next step S901, the processor 200 commands the transfer of a message requesting that pico base stations PBS1 to PBS3 located in the cell CE1 perform a virtual offloading capacity determination process.

At next step S902, the processor 200 detects the reception of virtual offloading capacities from pico base stations PBS1 to PBS3 located in the cell CE1 of the base station BS1.

At next step S903, the processor 200 selects at least one mobile terminal MT which has to be handed over by at least one pico base station PBS as disclosed at step S803 of Fig. 8.

At next step S904, the processor 200 commands the transfer to the pico base stations PBS1 to PBS3, of information indicating for which mobile terminal a handover should be performed and with which base station or pico base station.

**Fig. 10** discloses an algorithm executed by each pico base station according to the second mode of realization of the present invention.

More precisely, the present algorithm is executed by the processor 300 of each pico base station PBS.

At step S1000, the processor 300 checks if a message requesting the pico base stations PBS to perform a virtual offloading capacity determination process.

If a message requesting the pico base stations PBS to perform a virtual offloading capacity determination process, the processor 300 moves to step S1001. Otherwise, the processor 300 returns to step S1000.

At step S1001, the processor 300 commands the network interface 304 in order to transfer information related to the current conditions of the pico base station PBS regarding its radio environment to neighbouring pico base stations PBS as disclosed at step S501 of Fig. 5.

At next step S1002, the processor 300 performs the virtual offloading capacity calculation as disclosed in Fig. 7.

At next step S1003, the processor 300 commands the transfer, through the network interface 304, of the calculated virtual offloading capacity.

The virtual offloading capacity is transferred to the base station BS1 or to the core network device Cn.

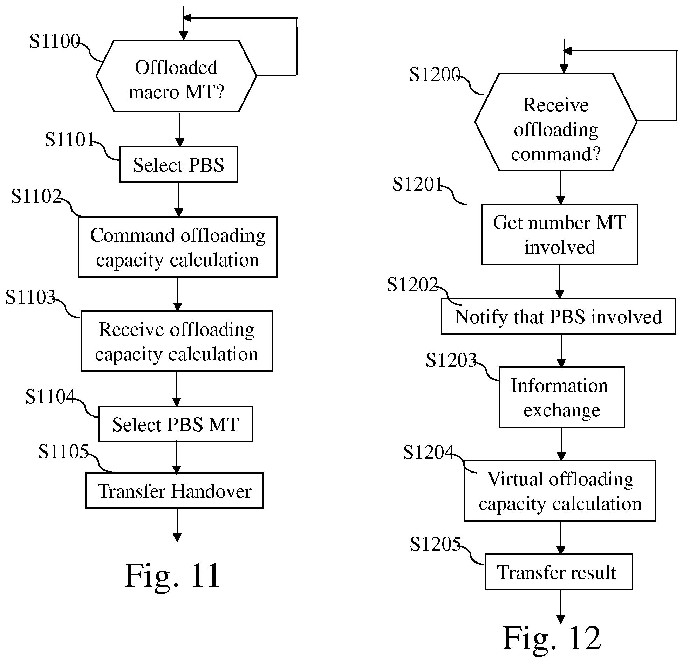

**Fig. 11** is an algorithm executed by a base station for determining for which mobile terminal a handover may be performed in order to be offloaded by pico base stations according to a third mode of realization of the present invention.

It has to be noted here that, instead of being executed by the base station BS1, the present algorithm may be executed by the core network device Cn.

More precisely, the present algorithm is executed by the processor 200 of the base station BS1.

At step S1100, the processor 200 checks if the base station BS1 needs to be offloaded. For example, the base station BS1 needs to be offloaded if more than 90 of its wireless interface 205 resources or of its network interface 204 resources are currently used.

If the base station BS1 needs to be offloaded, the processor 200 moves to step S1101. Otherwise, the processor 200 returns to step S1100.

At next step 1101, the processor 200 selects a subset of the pico base stations PBS which are located in the cell CE1.

The subset of pico base stations PBS is maintained by the processor 200 and the pico base stations PBS comprised in the subset enter or leave the subset group based on plural parameters.

For example, one parameter is the number of neighboring pico base stations of a pico base station PBS. The number of neighboring pico base stations PBS is determined according to a connectivity graph between neighboring pico base stations. A pico base station PBS enters in the subset if has a high number, for example five of neighboring pico base stations , i.e. if the pico base station PBS has enough candidates for the handover of the mobile terminals MT it serves. For example, a pico base station PBS enters in the subset group if its number of neighbors is close to the maximum number of the neighbors in the connectivity graph.

For example, one parameter is the number of mobile terminals MT served by the base station BS1 which are located in the cell of a pico base station PBS.

At next step S1102, the processor 200 commands the transfer of a message to each pico base station PBS in the subset requesting the pico base stations to perform a virtual offloading capacity determination process.

The message requesting the pico base stations to perform a virtual offloading capacity determination process may be a multicast signaling sent to each pico base station PBS in the subset.

The message requesting the pico base stations to perform a virtual offloading capacity determination process may be a dedicated unicast message to each pico base station of the subset. In that case, the message further comprises the number of mobile terminals MT currently served by the base station BS which could be handed over by the pico base station PBS. The message further comprises information identifying the mobile terminals MT currently served by the base station BS which could be handed over by the pico base station PBS.

At next step S1103, the processor 200 detects the reception of virtual offloading capacities from pico base stations of the subset.

At next step S1104, the processor 200 selects at least one mobile terminal MT which has to be handed over by at least one pico base station PBS as disclosed at step S803 of Fig. 8.

At next step S1105, the processor 200 commands the transfer to the pico base stations of the subset, of information indicating for which mobile terminal a handover should be performed and with which base station or pico base station.

**Fig. 12** discloses an algorithm executed by each pico base station according to the third mode of realization of the present invention.

More precisely, the present algorithm is executed by the processor 300 of each pico base station PBS.

At step S1200, the processor 300 checks if a message requesting the pico base stations PBS to perform a virtual offloading capacity determination process.

If a message requesting the pico base stations PBS to perform a virtual offloading capacity determination process, the processor 400 moves to step S1201. Otherwise, the processor 300 returns to step S1200.

At next step S1201, the processor 300 obtains the number of mobile terminals MT served by the base station BS1 for which a handover could be requested if it is comprised in the received message. The processor 300 may obtain information identifying the mobile terminals MT served by the base station BS1 for which a handover could be requested if it is comprised in the received message.

A next step S1202, the processor 300 commands the network interface 304 in order to notify its neighbouring stations PBS that the pico base station PBS belongs to the subset of pico base stations.

At step S1203, the processor 300 commands the network interface 304 in order to transfer information related to the current conditions of the pico base station PBS regarding its radio environment to neighbouring pico base stations PBS as disclosed at step S501 of Fig. 5.

At next step S1204, the processor 300 performs the virtual offloading capacity calculation as disclosed in Fig. 7 taking into account that the offloading algorithm used to compute the virtual offloading capacity may take into account that the pico base stations belonging to the subset should release resources in priority.

At next step S1205, the processor 300 commands the transfer, through the network interface 304, of the calculated virtual offloading capacity.

The virtual offloading capacity is transferred to the base station BS1 or to the core network device Cn.

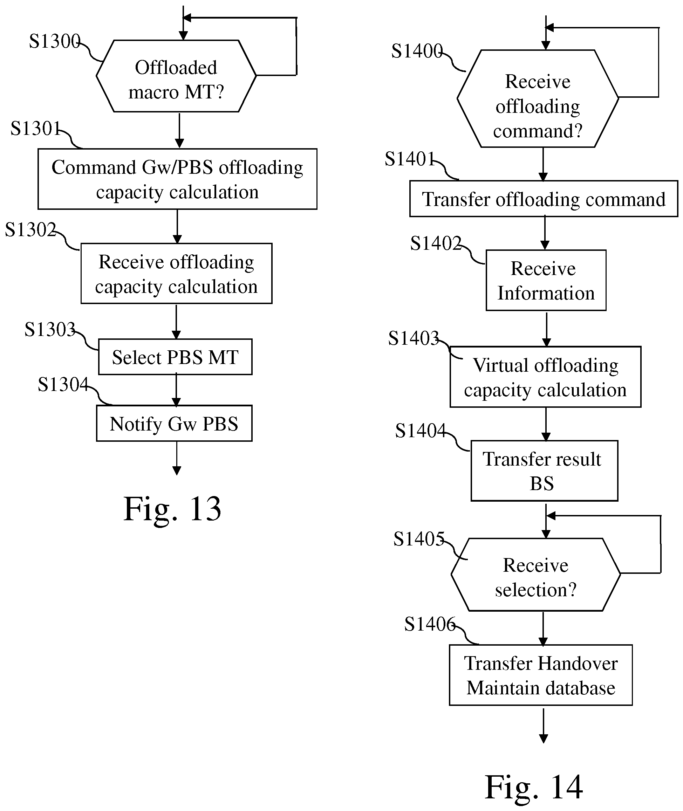

**Fig. 13** is an algorithm executed by a base station for determining for which mobile terminal a handover may be performed in order to be offloaded by pico base stations according to a fourth mode of realization of the present invention.

It has to be noted here that, instead of being executed by the base station BS1, the present algorithm may be executed by the core network device Cn.

More precisely, the present algorithm is executed by the processor 200 of the base station BS1.

At step S1300, the processor 200 checks if the base station BS1 needs to be offloaded. For example, the base station BS1 needs to be offloaded if more than 90 of its wireless interface 205 resources or of its network interface 204 resources are currently used.

If the base station BS1 needs to be offloaded, the processor 200 moves to step S1301. Otherwise, the processor 200 returns to step S1300.

At next step S1301, the processor 200 commands the transfer of a message requesting that pico base stations PBS1 to PBS3 located in the cell CE1 perform a virtual offloading capacity determination process. The message is transferred to the gateway Gw or to a pico base station PBS which forwards it to the gateway Gw.

At next step S1302, the processor 200 detects the reception of virtual offloading capacities of pico base stations PBS1 to PBS3 located in the cell CE1 of the base station BS1. The virtual offloading capacities are received from the gateway GW or from the pico base stations PBS.

At next step S1303, the processor 200 selects at least one mobile terminal MT which has to be handed over by at least one pico base station PBS as disclosed at step S803 of Fig. 8.

At next step S1304, the processor 200 commands the transfer of information indicating for which mobile terminal MT a handover should be performed and with which base station or pico base station.

For example, information indicating for which mobile terminal MT a handover should be performed and with which base station or pico base station is sent to the gateway Gw which broadcasts it to the pico bases stations PBS1 to PBS3.

For example, information indicating for which mobile terminal a handover should be performed and with which base station or pico base station are sent to the gateway and forwarded by the gateway only to the pico base stations PBS involved in the handovers.

For example, information indicating for which mobile terminal a handover should be performed and with which base station or pico base station are sent directly only to the pico base stations involved in the handovers. In that case, pico base stations PBS receiving such message inform the gateway Gw of handovers which are performed.

**Fig. 14** discloses an algorithm executed by a gateway according to the fourth mode of realization of the present invention.

More precisely, the present algorithm is executed by the processor 400 of the gateway Gw.

At step S1400, the processor 400 checks if a message requesting the pico base stations PBS to perform a virtual offloading capacity determination process.

If a message requesting the pico base stations PBS to perform a virtual offloading capacity determination process, the processor 400 moves to step S1401. Otherwise, the processor 300 returns to step S1400.

At step S1401, the processor 400 commands the transfer of a message requesting the pico base stations PBS to transfer information related to the current conditions of the pico base stations PBS regarding their radio environment.

At next step S1402, the processor 400 receives, through the network interface 404, from each pico base station PBS, information related to the current conditions of the pico base station PBS regarding their radio environment.

At next step S1402, the processor 400 performs the virtual offloading capacity calculation as disclosed in Fig. 7.

At next step S1403, the processor 400 commands the transfer, through the network interface 404, of the calculated virtual offloading capacity.

The virtual offloading capacity is transferred to the base station BS1 or to the core network device Cn.

At next step S1405, the processor 400 checks if a message comprising information indicating for which mobile terminal a handover should be performed and with which base station or pico base station is received from the base station BS1 or from at least one pico base station PBS.

If a message comprising information indicating for which mobile terminal a handover should be performed and with which base station or pico base station is received, the processor 400 moves to step S1406. Otherwise, the processor 400 returns to step S1405.

At step S1406, if the message is received from the base station BS1, the processor 400 transfers to each concerned pico base station PBS, information related to the handover in which the pico base station PBS is involved. If the message is received from at least one pico base station PBS, the processor 400 updates its database related to mobile terminals MT served by pico base stations.

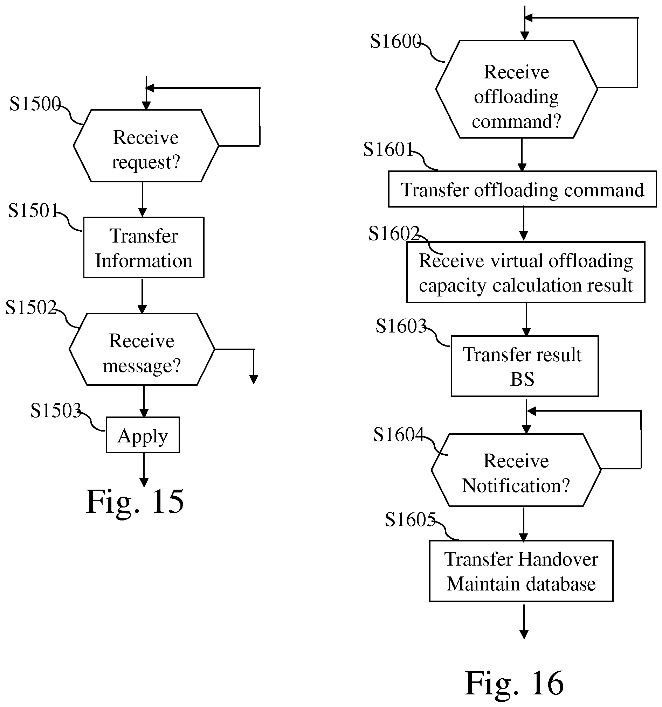

**Fig. 15** discloses an algorithm executed by each pico base station according to the fourth mode of realization of the present invention.

More precisely, the present algorithm is executed by the processor 300 of each pico base station PBS.

At step S1500, the processor 300 checks if a message requesting the pico base station PBS to transfer to the gateway Gw information related to the current conditions of the pico base station PBS regarding its radio environment to neighbouring pico base stations PBS.

If a message requesting the pico base station PBS to transfer to the gateway Gw information related to the current conditions of the pico base station PBS, the processor 300 moves to step S1501. Otherwise, the processor 300 returns to step S1500.

At step S1501, the processor 300 commands the network interface 304 in order to transfer information related to the current conditions of the pico base station PBS regarding its radio environment to the gateway Gw.

At next step S1502, the processor 300 checks if a message requesting the pico base station PBS to perform a handover.

If no message is received, the processor 300 interrupts the present algorithm. Otherwise, the processor 300 moves to step S1503 and proceeds to the handover.

**Fig. 16** discloses an algorithm executed by a gateway according to a variant of the fourth mode of realization of the present invention.

More precisely, the present algorithm is executed by the processor 400 of the gateway Gw.

At step S1600, the processor 400 checks if a message requesting the pico base stations PBS to perform a virtual offloading capacity determination process.

If a message requesting the pico base stations PBS to perform a virtual offloading capacity determination process, the processor 400 moves to step S1601. Otherwise, the processor 300 returns to step S1600.

At step S1601, the processor 400 commands the transfer of a message requesting the pico base stations PBS to perform a virtual offloading capacity determination process.

At next step S1602, the processor 400 receives, through the network interface 404, from each pico base station PBS the result of the virtual offloading capacity determination process.

At next step S1603, the processor 400 commands the transfer, through the network interface 404, of the received virtual offloading capacity results.

The virtual offloading capacity is transferred to the base station BS1 or to the core network device Cn.

At next step S1604, the processor 400 checks if a message indicating for which mobile terminal a handover should be performed and with which base station or pico base station is received from the base station BS1 or from at least one pico base station PBS.

If a message indicating for which mobile terminal MT a handover should be performed and with which base station or pico base station is received, the processor 400 moves to step S1605. Otherwise, the processor 400 returns to step S1604.

At step S1605, if the message is received from the base station BS1, the processor 400 transfers to each concerned pico base station PBS, information related to the handover in which the pico base station PBS is involved. If the message is received from at least one pico base station PBS, the processor 400 updates its database related to mobile terminals MT served by pico base stations.

Naturally, many modifications can be made to the embodiments of the invention described above without departing from the scope of the present invention.

## Claims

1. Method for offloading a base station of a wireless cellular telecommunication network by nodes of the wireless cellular telecommunication network, the nodes being located in a cell of the base station, the nodes being base stations and/or pico base stations and/or home base stations and/or relays, the base station serving plural mobile terminals, at least one node serving at least one mobile terminal, **characterized in that** the method comprises the steps of:
- obtaining (S800), by the base station serving the mobile terminals, the virtual offloading capacity of at least a part of the nodes located in the cell of the base station serving the mobile terminals, the virtual offloading capacity of one node being determined considering that at least one neighbouring node of the node may serve a mobile terminal currently served by the node, the virtual offloading capacity being the amount of the node interfaces resources that could be freed if at least one mobile terminal served by the node is handed over to a neighbouring node or being the amount of mobile terminals that could be served if at least one mobile terminal served by the node is handed over to a neighbouring node or being the throughput that the node could provide if at least one mobile terminal served by the node is handed over to a neighbouring node,
- determining (S802), by the base station serving the mobile terminals, with which neighbouring node a handover of the mobile terminal served by one node has to be performed according to virtual offloading capacities,
- performing (S803, S804), by the base station serving the mobile terminals, the handover of the mobile terminal served by said one node with the neighbouring node,
- performing (S803, S804), by the base station serving the mobile terminals, a handover of at least one mobile terminal served by the base station to the node which served the mobile terminal handed over to the neighbouring node.

2. Method according to claim 1 wherein the method comprises further step, executed by at least the node which served the mobile terminal handed over to the neighbouring node of obtaining load information from neighbouring nodes, the load information being the available resources of the node interfaces and/or the number of mobile terminals the node is serving and/or the number of neighbouring nodes and in that the virtual offloading capacity is obtained from obtained load information.

3. Method according to any of the claims 1 to 2, wherein the obtaining of the virtual offloading capacity is obtained from each node periodically and transferred to the base station and the determining with which neighbouring node a handover of the mobile terminal served by one node has to be performed is performed by the base station.

4. Method according to any of the claims 1 to 2, wherein the method comprises further step executed by the base station of transferring a message to each node requesting the node to determine the virtual offloading capacity, the virtual offloading capacities are obtained by the base station and the determining with which neighbouring node a handover of the mobile terminal served by one node has to be performed is executed by the base station.

5. Method according to any of the claims 1 to 2, wherein the method comprises further steps executed by the base station of:
- selecting, among the nodes located in the cell of the base station, a subset of nodes,
- transferring a message to the nodes of the subset of nodes, the message requesting the nodes to determine the virtual offloading capacity, the virtual offloading capacities are obtained by the base station and the determining with which neighbouring node a handover of the mobile terminal served by one node has to be performed is executed by the base station.

6. Method according to claim 5, wherein the nodes of the subset of nodes are selected according to the number of neighbouring nodes of the nodes and/or according to number of mobile terminals served by the base station and located in a cell of said nodes.

7. Method according to claim 5 or 6, wherein one message is transferred to each node of the subset of nodes, each message further comprising information indicating the number of mobile terminals served by the base station for which a handover is susceptible to be performed.

8. Method according to any of the claims 5 to 7, wherein each node of the subset of nodes notifies the neighbouring node that the node belongs to the subset of nodes.

9. Method according to any of the claims 1 to 2, wherein the nodes are linked to a gateway and in that the method comprises further step executed by the base station of transferring a message to the gateway requesting the gateway to determine the virtual offloading capacities, the virtual offloading capacities are obtained by the base station and the determining with which neighbouring node a handover of the mobile terminal served by one node has to be performed is performed by the base station.

10. Method according to claim 9, wherein the method comprises further step executed by the base station of notifying to the gateway which node serving at least one mobile terminal has to perform a handover with one neighbouring node or notifying the nodes serving at least one mobile terminal for which a handover has to be performed with one neighbouring node.

11. Method according to claim 10, wherein the method comprises further step executed by the base station of notifying to the gateway which node has to perform a handover of at least mobile terminal served by the base station or notifying to each node involved in at least one handover of at least one mobile terminal served by the base station.

12. Method according to any of the claims 1 to 11, wherein the nodes are base stations and/or pico base stations and/or home base stations and/or relays.

13. Device for use in offloading a base station of a wireless cellular telecommunication network by nodes of said wireless cellular telecommunication network, the nodes being located in a cell of the base station, the nodes being base stations and/or pico base stations and/or home base stations and/or relays, the base station serving plural mobile terminals, at least one node serving at least one mobile terminal, **characterized in that** the device is included in the base station serving the mobile terminals and comprises :
- means for obtaining the virtual offloading capacity of at least a part of the nodes located in the cell of the base station, the virtual offloading capacity of one node being determined considering that at least one neighbouring node of the node may serve a mobile terminal currently served by the node, the virtual offloading capacity being the amount of the node interfaces resources that could be freed if at least one mobile terminal served by the node is handed over to a neighbouring node or being the amount of mobile terminals that could be served if at least one mobile terminal served by the node is handed over to a neighbouring node or being the throughput that the node could provide if at least one mobile terminal served by the node is handed over to a neighbouring node,
- means for determining with which neighbouring node a handover of the mobile terminal served by one node has to be performed according to virtual offloading capacities,
- means for performing the handover of the mobile terminal served by said one node with the neighbouring node,
- means for performing a handover of at least one mobile terminal served by the base station to the node which served the mobile terminal handed over to the neighbouring node.

## Patentansprüche

1. Verfahren zum Entlasten einer Basisstation eines drahtlosen zellularen Telekommunikationsnetzwerks durch Knoten des drahtlosen zellularen Telekommunikationsnetzwerks, wobei die Knoten in einer Zelle der Basisstation angeordnet sind, wobei die Knoten Basisstationen und/oder Piko-Basisstationen und/oder Heim-Basisstationen und/oder Relais sind, wobei die Basisstation mehrere mobile Endgeräte bedient, wobei wenigstens ein Knoten wenigstens ein mobiles Endgerät bedient, **dadurch gekennzeichnet, dass** das Verfahren die folgenden Schritte umfasst:
- Erhalten (S800), durch die Basisstation, die die mobilen Endgeräte bedient, der virtuellen Entlastungskapazität wenigstens eines Teils der Knoten, die in der Zelle der Basisstation angeordnet ist, die die mobilen Endgeräte bedient, wobei die virtuelle Entlastungskapazität von einem Knoten unter Berücksichtigung dessen bestimmt wird, dass wenigstens ein Nachbarknoten des Knotens ein aktuell durch den Knoten bedientes mobiles Endgerät bedienen kann, wobei die virtuelle Entlastungskapazität das Ausmaß der Knotenschnittstellenressourcen ist, die freigegeben werden könnten, wenn wenigstens ein durch den Knoten bedientes mobiles Endgerät zu einem Nachbarknoten übergeben wird, oder das Ausmaß an mobilen Endgeräten ist, die bedient werden könnten, wenn wenigstens ein durch den Knoten bedientes mobiles Endgerät zu einem Nachbarknoten übergeben wird, oder der Durchsatz ist, den der Knoten bereitstellen könnte, wenn wenigstens ein durch den Knoten bedientes mobiles Endgerät zu einem Nachbarknoten übergeben wird,
- Bestimmen (S802), durch die Basisstation, die die mobilen Endgeräte bedient, mit welchem Nachbarknoten eine Übergabe des durch einen Knoten bedienten mobilen Endgeräts durchgeführt werden muss, gemäß virtuellen Entlastungskapazitäten,
- Durchführen (S803, S804), durch die Basisstation, die die mobilen Endgeräte bedient, der Übergabe des durch den einen Knoten bedienten mobilen Endgeräts mit dem Nachbarknoten,
- Durchführen (S803, S804), durch die Basisstation, die die mobilen Endgeräte bedient, einer Übergabe von wenigstens einem durch die Basisstation bedienten mobilen Endgerät zu dem Knoten, der das zum Nachbarknoten übergebene mobile Endgerät bediente.

2. Verfahren nach Anspruch 1, wobei das Verfahren einen durch wenigstens den Knoten, der das zum Nachbarknoten übergebene mobile Endgerät bediente, ausgeführten weiteren Schritt eines Erhaltens von Auslastungsinformation von Nachbarknoten umfasst, wobei die Auslastungsinformation die verfügbaren Ressourcen der Knotenschnittstellen und/oder die Anzahl von mobilen Endgeräten, die der Knoten gerade bedient, und/oder die Anzahl von Nachbarknoten sind oder ist, und wobei die virtuelle Entlastungskapazität aus erhaltener Auslastungsinformation erhalten wird.

3. Verfahren nach einem der Ansprüche 1 bis 2, wobei das Erhalten der virtuellen Entlastungskapazität von jedem Knoten periodisch erhalten wird und zur Basisstation transferiert wird und das Bestimmen, mit welchem Nachbarknoten eine Übergabe des durch einen Knoten bedienten mobilen Endgeräts durchgeführt werden muss, durch die Basisstation durchgeführt wird.

4. Verfahren nach einem der Ansprüche 1 bis 2, wobei das Verfahren einen weiteren durch die Basisstation ausgeführten Schritt eines Transferierens einer Nachricht zu jedem Knoten umfasst, die den Knoten auffordert, die virtuelle Entlastungskapazität zu bestimmen, wobei die virtuellen Entlastungskapazitäten durch die Basisstation erhalten werden und das Bestimmen, mit welchem Nachbarknoten eine Übergabe des durch einen Koten bedienten mobilen Endgeräts durchgeführt werden muss, durch die Basisstation ausgeführt wird.

5. Verfahren nach einem der Ansprüche 1 bis 2, wobei das Verfahren folgende weitere durch die Basisstation ausgeführte Schritte umfasst:
- Auswählen, unter den in der Zelle der Basisstation angeordneten Knoten, einer Untergruppe von Knoten,
- Transferieren einer Nachricht zu den Knoten der Untergruppe von Knoten, wobei die Nachricht die Knoten auffordert, die virtuelle Entlastungskapazität zu bestimmen, wobei die virtuellen Entlastungskapazitäten durch die Basisstation erhalten werden und das Bestimmen, mit welchem Nachbarknoten eine Übergabe des durch einen Koten bedienten mobilen Endgeräts durchgeführt werden muss, durch die Basisstation ausgeführt wird.

6. Verfahren nach Anspruch 5, wobei die Knoten der Untergruppe von Knoten gemäß der Anzahl von Nachbarknoten der Knoten und/oder gemäß der Anzahl von durch die Basisstation bedienten und in einer Zelle der Knoten angeordneten mobilen Endgeräten ausgewählt werden.

7. Verfahren nach Anspruch 5 oder 6, wobei eine Nachricht zu jedem Knoten der Untergruppe von Knoten transferiert wird, wobei jede Nachricht weiterhin Information umfasst, die die Anzahl von durch die Basisstation bedienten mobilen Endgeräten anzeigt, die dafür empfänglich sind, dass eine Übergabe durchgeführt wird.

8. Verfahren nach einem der Ansprüche 5 bis 7, wobei jeder Knoten der Untergruppe von Knoten dem Nachbarknoten meldet, dass der Knoten zur Untergruppe von Knoten gehört.

9. Verfahren nach einem der Ansprüche 1 bis 2, wobei die Knoten mit einem Gateway verbunden sind und wobei das Verfahren einen weiteren durch die Basisstation ausgeführten Schritt eines Transferierens einer Nachricht zum Gateway umfasst, die das Gateway auffordert, die virtuellen Entlastungskapazitäten zu bestimmen, wobei die virtuellen Entlastungskapazitäten durch die Basisstation erhalten werden und das Bastimmen, mit welchem Nachbarknoten eine Übergabe des durch einen Koten bedienten mobilen Endgeräts durchgeführt werden muss, durch die Basisstation durchgeführt wird.

10. Verfahren nach Anspruch 9, wobei das Verfahren einen weiteren durch die Basisstation ausgeführten Schritt eines Meldens zum Gateway umfasst, welcher Knoten, der wenigstens ein mobiles Endgerät bedient, eine Übergabe mit einem Nachbarknoten durchführen muss, oder eines Meldens der Knoten, die wenigstens ein mobiles Endgerät bedienen, für welches eine Übergabe mit einem Nachbarknoten durchgeführt werden muss.

11. Verfahren nach Anspruch 10, wobei das Verfahren einen weiteren durch die Basisstation ausgeführten Schritt eines Meldens zum Gateway umfasst, welcher Knoten eine Übergabe wenigstens eines durch die Basisstation bedienten mobilen Endgeräts durchführen muss, oder eines Meldens zu jedem bei wenigstens einer Übergabe wenigstens eines durch die Basisstation bedienten mobilen Endgeräts beteiligten Knoten.

12. Verfahren nach einem der Ansprüche 1 bis 11, wobei die Knoten Basisstationen und/oder Piko-Basisstationen und/oder Heim-Basisstationen und/oder Relais sind.

13. Vorrichtung zur Verwendung beim Entlasten einer Basisstation eines drahtlosen zellularen Telekommunikationsnetzwerks durch Knoten des drahtlosen zellularen Telekommunikationsnetzwerks, wobei die Knoten in einer Zelle der Basisstation angeordnet sind, wobei die Knoten Basisstationen und/oder Piko-Basisstationen und/oder Heim-Basisstationen und/oder Relais sind, wobei die Basisstation mehrere mobile Endgeräte bedient, wobei wenigstens ein Knoten wenigstens ein mobiles Endgerät bedient, **dadurch gekennzeichnet, dass** die Vorrichtung in der Basisstation enthalten ist, die die mobilen Endgeräte bedient, und folgendes umfasst:
- Mittel zum Erhalten der virtuellen Entlastungskapazität wenigstens eines Teils der Knoten, die in der Zelle der Basisstation angeordnet ist, die die mobilen Endgeräte bedient, wobei die virtuelle Entlastungskapazität von einem Knoten unter Berücksichtigung dessen bestimmt wird, dass wenigstens ein Nachbarknoten des Knotens ein aktuell durch den Knoten bedientes mobiles Endgerät bedienen kann, wobei die virtuelle Entlastungskapazität das Ausmaß der Knotenschnittstellenressourcen ist, die freigegeben werden könnten, wenn wenigstens ein durch den Knoten bedientes mobiles Endgerät zu einem Nachbarknoten übergeben wird, oder das Ausmaß an mobilen Endgeräten ist, die bedient werden könnten, wenn wenigstens ein durch den Knoten bedientes mobiles Endgerät zu einem Nachbarknoten übergeben wird, oder der Durchsatz ist, den der Knoten bereitstellen könnte, wenn wenigstens ein durch den Knoten bedientes mobiles Endgerät zu einem Nachbarknoten übergeben wird,
- Mittel zum Bestimmen, mit welchem Nachbarknoten eine Übergabe des durch einen Knoten bedienten mobilen Endgeräts durchgeführt werden muss, gemäß virtuellen Entlastungskapazitäten,
- Mittel zum Durchführen der Übergabe des durch den einen Knoten bedienten mobilen Endgeräts mit dem Nachbarknoten,
- Mittel zum Durchführen einer Übergabe von wenigstens einem durch die Basisstation bedienten mobilen Endgerät zu dem Knoten, der das zum Nachbarknoten übergebene mobile Endgerät bediente.

## Revendications

1. Procédé de déchargement d'une station de base d'un réseau de télécommunication cellulaire sans fil par des noeuds du réseau de télécommunication cellulaire sans fil, les noeuds étant situés dans une cellule de la station de base, les noeuds étant des stations de base et/ou des pico stations de base et/ou des stations de base domestiques et/ou des relais, la station de base servant plusieurs terminaux mobiles, au moins un noeud servant au moins un terminal mobile, **caractérisé en ce que** le procédé comporte les étapes de :
- obtention (S800), par la station de base servant les terminaux mobiles, de la capacité de déchargement virtuelle d'au moins une partie des noeuds situés dans la cellule de la station de base servant les terminaux mobiles, la capacité de déchargement virtuelle d'un noeud étant déterminée en considérant qu'au moins un noeud voisin du noeud peut servir un terminal mobile actuellement servi par le noeud, la capacité de déchargement virtuelle étant la quantité de ressources d'interface du noeud pouvant être libérée si au moins un terminal mobile servi par le noeud est transféré à un noeud voisin ou la quantité de terminaux mobiles pouvant être servis si au moins un terminal mobile servi par le noeud est transféré à un noeud voisin ou le débit que le noeud pourrait fournir si au moins un terminal mobile servi par le noeud est transféré à un noeud voisin,
- détermination (S802), par la station de base servant les terminaux mobiles, avec quel noeud voisin un transfert du terminal mobile servi par un noeud doit être effectué en fonction des capacités de déchargement virtuelles,
- exécution (S803, S804), par la station de base servant les terminaux mobiles, du transfert d'au moins un terminal mobile servi par ledit un noeud avec le noeud voisin,
- exécution (S803, S804), par la station de base servant les terminaux mobiles, d'un transfert d'au moins un terminal mobile servi par la station de base au noeud ayant servi le terminal mobile transféré au noeud voisin.

2. Procédé selon la revendication 1, dans lequel le procédé comporte une étape supplémentaire, exécutée par au moins le noeud qui a servi le terminal mobile transféré au noeud voisin d'obtention d'information de charge des noeuds voisins, l'information de charge étant les ressources disponibles des interfaces du noeud et/ou le nombre de terminaux mobiles servis par le noeud et/ou le nombre de noeuds voisins et en ce que la capacité de déchargement virtuelle est obtenue à partir des informations de charge obtenues.

3. Procédé selon l'une quelconque des revendications 1 à 2, dans lequel l'obtention de la capacité de déchargement virtuelle est obtenue périodiquement de chaque noeud et transférée à la station de base et la détermination avec quel noeud voisin un transfert du terminal mobile servi par un noeud doit être effectué est effectuée par la station de base.

4. Procédé selon l'une quelconque des revendications 1 à 2, dans lequel le procédé comporte en outre une étape exécutée par la station de base de transfert d'un message à chaque noeud demandant au noeud de déterminer la capacité de déchargement virtuelle, les capacités de déchargement virtuelles étant obtenues par la station de base et la détermination avec quel noeud voisin le transfert du terminal mobile servi par un noeud est exécutée par la station de base.

5. Procédé selon l'une quelconque des revendications 1 à 2, dans lequel le procédé comporte les étapes supplémentaires exécutées par la station de base de :
- sélection, parmi les noeuds situés dans la cellule de la station de base, d'un sous-ensemble de noeuds,
- transfert d'un message aux noeuds du sous-ensemble de noeuds, le message demandant aux noeuds de déterminer la capacité de déchargement virtuelle, les capacités de déchargement virtuelles sont obtenues par la station de base et la détermination avec quel noeud voisin un transfert du terminal mobile servi par un noeud doit être exécuté est exécutée par la station de base.

6. Procédé selon la revendication 5, dans lequel les noeuds du sous-ensemble de noeuds sont sélectionnés en fonction du nombre de noeuds voisins des noeuds et/ou en fonction du nombre de terminaux mobiles servis par la station de base et situés dans une cellule desdits noeuds.

7. Procédé selon la revendication 5 ou 6, **caractérisé en ce qu'**un message est transféré à chaque noeud du sous-ensemble de noeuds, chaque message comprenant en outre une information indiquant le nombre de terminaux mobiles servis par la station de base pour lesquels un transfert est susceptible d'être effectué.

8. Procédé selon l'une quelconque des revendications 5 à 7, dans lequel chaque noeud du sous-ensemble de noeuds notifie au noeud voisin que le noeud appartient au sous-ensemble de noeuds.

9. Procédé selon l'une quelconque des revendications 1 à 2, dans lequel les noeuds sont reliés à une passerelle et en ce que le procédé comporte en outre une étape exécutée par la station de base de transfert d'un message à la passerelle demandant à la passerelle de déterminer les capacités de déchargement virtuelles, les capacités de déchargement virtuelles sont obtenues par la station de base et la détermination avec quel noeud voisin un transfert du terminal mobile servi par un noeud doit être effectuée est effectuée par la station de base.

10. Procédé selon la revendication 9, dans lequel le procédé comporte en outre une étape exécutée par la station de base de notification à la passerelle de quel noeud servant au moins un terminal mobile doit effectuer un transfert avec un noeud voisin ou de notification aux noeuds servant au moins un terminal mobile pour lequel un transfert doit être effectué avec un noeud voisin.

11. Procédé selon la revendication 10, dans lequel le procédé comprend en outre une étape exécutée par la station de base de notification à la passerelle de quel noeud doit effectuer un transfert d'au moins un terminal mobile servi par la station de base ou de notification à chaque noeud impliqué dans au moins un transfert d'au moins un terminal mobile servi par la station de base.

12. Procédé selon l'une quelconque des revendications 1 à 11, dans lequel les noeuds sont des stations de base et/ou des pico stations de base et/ou des stations de base résidentielles et/ou des relais.

13. Dispositif pour le déchargement d'une station de base d'un réseau de télécommunication cellulaire sans fil par des noeuds du réseau de télécommunication cellulaire sans fil, les noeuds étant situés dans une cellule de la station de base, les noeuds étant des stations de base et/ou des pico stations de base et/ou des stations de base domestiques et/ou des relais, la station de base servant plusieurs terminaux mobiles, au moins un noeud servant au moins un terminal mobile, **caractérisée en ce que** le dispositif est compris dans la station de base servant les terminaux mobiles et comporte :
- des moyens d'obtention, par la station de base servant les terminaux mobiles, de la capacité de déchargement virtuelle d'au moins une partie des noeuds situés dans la cellule de la station de base servant les terminaux mobiles, la capacité de déchargement virtuelle d'un noeud étant déterminée en considérant qu'au moins un noeud voisin du noeud peut servir un terminal mobile actuellement servi par le noeud, la capacité de déchargement virtuelle étant la quantité de ressources d'interface du noeud pouvant être libérée si au moins un terminal mobile servi par le noeud est transféré à un noeud voisin ou la quantité de terminaux mobiles pouvant être servis si au moins un terminal mobile servi par le noeud est transféré à un noeud voisin ou le débit que le noeud pourrait fournir si au moins un terminal mobile servi par le noeud est transféré à un noeud voisin,
- des moyens de détermination, par la station de base servant les terminaux mobiles, avec quel noeud voisin un transfert du terminal mobile servi par un noeud doit être effectué en fonction des capacités de déchargement virtuelles,
- des moyens d'exécution, par la station de base servant les terminaux mobiles, du transfert d'au moins un terminal mobile servi par ledit un noeud avec le noeud voisin,
- des moyens d'exécution, par la station de base servant les terminaux mobiles, d'un transfert d'au moins un terminal mobile servi par la station de base au noeud ayant servi le terminal mobile transféré au noeud voisin.
